(19) Europäisches Patentamt
European Patent Office
Office européen des brevets

(11) **EP 4 156 433 A1**

(12) **EUROPEAN PATENT APPLICATION**
published in accordance with Art. 153(4) EPC

(43) Date of publication:
**29.03.2023 Bulletin 2023/13**

(21) Application number: **20945969.2**

(22) Date of filing: **24.07.2020**

(51) International Patent Classification (IPC):
***H02J 3/00*** *(2006.01)*

(52) Cooperative Patent Classification (CPC):
**H02J 3/00**

(86) International application number:
**PCT/CN2020/104454**

(87) International publication number:
**WO 2022/016510 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Digital Power Technologies Co., Ltd.**
**Shenzhen, Guangdong 518043 (CN)**

(72) Inventors:
• **SHAO, Zhangping**
  **Shenzhen, Guangdong 518129 (CN)**
• **XIN, Kai**
  **Shenzhen, Guangdong 518129 (CN)**
• **GUO, Haibin**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **CURRENT CONTROL METHOD AND SYSTEM USED WHEN ASYMMETRICAL VOLTAGE FAULT OCCURS**

(57) This application discloses a current control method and system for a voltage asymmetry fault. When a voltage asymmetry fault occurs, a first current limit value is obtained based on a post-fault positive-sequence voltage and a pre-fault positive-sequence reactive current, and a second current limit value is obtained based on a post-fault negative-sequence voltage and a pre-fault negative-sequence voltage. A third current limit value and a fourth current limit value are obtained based on the first current limit value and the second current limit value. A magnitude of a positive-sequence reactive current is limited by using the third current limit value, and a magnitude of a negative-sequence reactive current is limited by using the fourth current limit value, to prevent the negative-sequence reactive current injected when the voltage asymmetry fault occurs from causing an overcurrent. In the method, a magnitude limit value for the positive-sequence reactive current and a magnitude limit value for the negative-sequence reactive current are obtained at a time, without repeated iterative calculation. A positive-sequence reactive current and a negative-sequence reactive current that meet a requirement are obtained within a relatively short time, thereby shortening a reactive current adjustment time, and resolving a problem that a negative-sequence reactive current causes an overcurrent for a converter.

When a voltage asymmetry fault occurs, obtain a post-fault positive-sequence voltage $U_1$, a post-fault negative-sequence voltage $U_2$, a pre-fault negative-sequence voltage $U_{02}$, and a pre-fault positive-sequence reactive current $I_{Q0}$ — 201

Obtain a first current limit value $I_1$ based on $I_{Q0}$ and $U_1$, and obtain a second current limit value $I_2$ based on $U_2$ and $U_{02}$ — 202

Obtain a third current limit value $I_3$ based on $I_1$ and $I_2$, and obtain a fourth current limit value $I_4$ based on $I_1$ and $I_2$ — 203

Limit a magnitude of a positive-sequence reactive current by using $I_3$, and limit a magnitude of a negative-sequence reactive current by using $I_4$ — 204

FIG. 3

**Description**

**TECHNICAL FIELD**

This application relates to the field of electric and electronic technologies, and in particular, to a current control method and system for a voltage asymmetry fault.

**BACKGROUND**

When a single-phase or two-phase fault occurs on a transmission line of a power grid, a voltage asymmetry fault such as a high voltage asymmetry fault or a low voltage asymmetry fault occurs on the power grid. To reduce impact of the asymmetry fault, a converter operates on the grid, and injects a positive-sequence reactive current and a negative-sequence reactive current into the power grid.

However, the negative-sequence reactive current causes three-phase current imbalance for the converter, thereby easily causing an overcurrent problem for the converter.

To resolve the foregoing problem, the converter is controlled, based on a given initial value of the positive-sequence reactive current and a given initial value of the negative-sequence reactive current, to output three-phase currents. When it is detected that one of the output three-phase currents exceeds an allowed value, the injected positive-sequence reactive current and negative-sequence reactive current are adjusted. The converter is controlled, by using an adjusted positive-sequence reactive current and negative-sequence reactive current, to output three-phase currents again, until all output three-phase currents meet a requirement.

In the foregoing solution, to obtain the three-phase currents that meet the requirement, repeated iterations need to be performed to meet the requirement. It takes a relatively long time to obtain a reactive current. The relatively long time cannot meet a requirement for a reactive current adjustment time in an on-grid standard.

**SUMMARY**

This application provides a current control method and system for a voltage asymmetry fault, to meet a requirement for a reactive current adjustment time when a voltage asymmetry fault occurs.

This application provides a current control method for a voltage asymmetry fault. When a voltage asymmetry fault occurs, a first current limit value is obtained based on a post-fault positive-sequence voltage and a pre-fault positive-sequence reactive current, and a second current limit value is obtained based on a post-fault negative-sequence voltage and a pre-fault negative-sequence voltage. A third current limit value $I_3$ and a fourth current limit value $I_4$ are obtained based on the first current limit value $I_1$ and the second current limit value $I_2$, where $I_3$ is directly proportional to $I_1$, and $I_4$ is directly proportional to $I_2$. A magnitude of a positive-sequence reactive current is limited by using $I_3$, and a magnitude of a negative-sequence reactive current is limited by using $I_4$, to prevent the negative-sequence reactive current injected when the voltage asymmetry fault occurs from causing an overcurrent. In the method, a magnitude limit value for the positive-sequence reactive current and a magnitude limit value for the negative-sequence reactive current are obtained at a time, without repeated iterative calculation. A positive-sequence reactive current and a negative-sequence reactive current that meet a requirement are obtained within a relatively short time, thereby shortening a reactive current adjustment time.

A specific manner of determining a voltage asymmetry fault is not limited in this application. For example, whether a voltage asymmetry fault occurs may be determined by using three-phase voltages at a converter port. The three-phase voltages may be three-phase line voltages or three-phase phase voltages.

Whether the three-phase voltages are equal may be determined by using effective values of the three-phase voltages. Specifically, whether effective values of the three-phase phase voltages are equal may be determined, or whether effective values of the three-phase line voltages are equal may be determined. Whether a smallest value of the three-phase voltages is less than a low voltage fault trigger threshold is determined, or whether a largest value of the three-phase voltages is greater than a high voltage fault trigger threshold is determined. If yes, it is determined that a voltage asymmetry fault occurs.

For example, an application scenario is a three-phase power grid. A converter may be controlled based on a magnitude-limited commanded value of the positive-sequence reactive current and a magnitude-limited commanded value of the negative-sequence reactive current. Specifically, a driving pulse signal for a switch in the converter may be generated based on the magnitude-limited commanded value of the positive-sequence reactive current and the magnitude-limited commanded value of the negative-sequence reactive current, so that a current in the converter is not subject to an overcurrent phenomenon.

This application further provides a method for limiting a magnitude of a positive-sequence active current: obtaining a fifth current limit value $I_5$ based on $I_3$ and $I_4$, and limiting the magnitude of the positive-sequence active current

by using $I_5$.

Preferably, the obtaining $I_3$ based on $I_1$ and $I_2$ specifically includes: when a sum $I_{12}$ of $I_1$ and $I_2$ is less than or equal to a preset current, $I_3$ is equal to $I_1$, where the preset current is a rated current of a converter or a maximum current of the converter; or when the sum $I_{12}$ of $I_1$ and $I_2$ is greater than the preset current, obtaining $I_3$ based on the preset current and a ratio of $I_1$ to $I_{12}$.

Preferably, the obtaining $I_4$ based on $I_1$ and $I_2$ specifically includes: when a sum $I_{12}$ of $I_1$ and $I_2$ is less than or equal to a preset current, $I_4$ is equal to $I_2$, where the preset current is a rated current of a converter or a maximum current of the converter; or when the sum $I_{12}$ of $I_1$ and $I_2$ is greater than the preset current, obtaining $I_4$ based on the preset current and a ratio of $I_2$ to $I_{12}$.

Preferably, the obtaining a fifth current limit value $I_5$ based on $I_3$ and $I_4$ specifically includes: obtaining $I_5$ based on $I_3$, $I_4$, and a preset current, where the preset current is a rated current of a converter or a maximum current of the converter.

Preferably, the obtaining $I_3$ based on the preset current and a ratio of $I_1$ to $I_{12}$ is specifically obtaining $I_3$ by using the following formula:

$$I_3 = \frac{I_1 \times I_{LMT}}{I_1 + I_2},$$

where

$I_{LMT}$ is the preset current.

Preferably, the obtaining $I_4$ based on the preset current and a ratio of $I_2$ to $I_{12}$ is specifically obtaining $I_4$ by using the following formula:

$$I_4 = \frac{I_2 \times I_{LMT}}{I_1 + I_2},$$

where

$I_{LMT}$ is the preset current.

Preferably, the obtaining $I_5$ based on $I_3$, $I_4$, and a preset current is specifically obtaining $I_5$ by using the following formula:

$$I_5 = \max\left[\sqrt{(I_{LMT} - |I_4|)^2 - |I_3|^2}, K_3 \times I_{LMT}\right],$$

where

$I_{LMT}$ is the preset current, $K_3$ is a preset adjustment coefficient for the positive-sequence active current, and $0 < K_3 \leq 1$.

Preferably, the obtaining a first current limit value $I_1$ based on $I_{Q0}$ and $U_1$ is specifically obtaining $I_1$ by using the following formula:

$$I_1 = |I_{Q0} + K_1 \times I_{LMT} \times (U_{01} - U_1)/U_N|,$$

where

$I_{LMT}$ is the preset current, $U_{01}$ is the pre-fault positive-sequence voltage, $U_N$ is a rated voltage of the converter, $K_1$ is a preset adjustment coefficient for the positive-sequence reactive current, $0 < K_1 \leq 10$, and the preset current is the rated current of the converter or the maximum current of the converter.

Preferably, the obtaining a first current limit value $I_1$ based on $I_{Q0}$ and $U_1$ is specifically obtaining $I_1$ by using the following formula:

$$I_1 = |I_{Q0} + K_1 \times I_{LMT} \times (U_{TR} - U_1)/U_N|,$$

where

$I_{LMT}$ is the preset current, $U_{TR}$ is a preset trigger threshold for a voltage asymmetry fault, $U_N$ is a rated voltage of the converter, $K_1$ is a preset adjustment coefficient for the positive-sequence reactive current, and the preset current is the rated current of the converter or the maximum current of the converter.

Preferably, the obtaining a second current limit value $I_2$ based on $U_2$ and $U_{02}$ is specifically obtaining $I_2$ by using the following formula:

$$I_2 = |K_2 \times I_{LMT} \times (U_{02} - U_2)/U_N|,$$

where

$I_{LMT}$ is the preset current, $U_N$ is a rated voltage of the converter, $K_2$ is a preset adjustment coefficient for the negative-sequence reactive current, $0 < K_2 \leq 10$, and the preset current is the rated current of the converter or the maximum current of the converter.

Preferably, the limiting a magnitude of a positive-sequence reactive current by using $I_3$, and limiting a magnitude of a negative-sequence reactive current by using $I_4$ is specifically as follows:

$$|I_{Q1}{}^*| \leq I_3, |I_{Q2}{}^*| \leq I_4,$$

where

$I_{Q1}{}^*$ is a commanded value of the positive-sequence reactive current, and $I_{Q2}{}^*$ is a commanded value of the negative-sequence reactive current.

Preferably, the limiting a magnitude of a positive-sequence active current by using $I_5$ is specifically as follows:

$$|I_{P1}{}^*| \leq I_5,$$

where

$I_{P1}{}^*$ is a commanded value of the positive-sequence active current.

This application further provides a converter system, to prevent a negative-sequence reactive current injected when a voltage asymmetry fault occurs from causing an overcurrent. In the method, a magnitude limit value for the positive-sequence reactive current and a magnitude limit value for the negative-sequence reactive current are obtained at a time, without repeated iterative calculation. A positive-sequence reactive current and a negative-sequence reactive current that meet a requirement are obtained within a relatively short time, thereby shortening a reactive current adjustment time. The system includes a converter and a controller. A first side of the converter is used to connect to a direct current, and a second side of the converter is used to connect to a power grid. The converter is configured to convert a direct current into an alternating current and transmit the alternating current to the power grid, or is configured to rectify an alternating current transmitted by the power grid into a direct current. The controller is configured to: when a voltage asymmetry fault occurs, obtain a post-fault positive-sequence voltage $U_1$, a post-fault negative-sequence voltage $U_2$, a pre-fault negative-sequence voltage $U_{02}$, and a pre-fault positive-sequence reactive current $I_{Q0}$; obtain a first current limit value $I_1$ based on $I_{Q0}$ and $U_1$, and obtain a second current limit value $I_2$ based on $U_2$ and $U_{02}$; obtain a third current limit value $I_3$ based on $I_1$ and $I_2$, and obtain a fourth current limit value $I_4$ based on $I_{Q0}$ and $U_1$; and limit a magnitude of a positive-sequence reactive current by using $I_3$, and limit a magnitude of a negative-sequence reactive current by using $I_4$, where $I_3$ is directly proportional to $I_1$, and $I_4$ is directly proportional to $I_2$.

A specific manner of determining a voltage asymmetry fault is not limited in this application. For example, whether a voltage asymmetry fault occurs may be determined by using three-phase voltages at a converter port. The three-phase voltages may be three-phase line voltages or three-phase phase voltages.

Whether the three-phase voltages are equal may be determined by using effective values of the three-phase voltages. Specifically, whether effective values of the three-phase phase voltages are equal may be determined, or whether effective values of the three-phase line voltages are equal may be determined. Whether a smallest value of the three-phase voltages is less than a low voltage fault trigger threshold is determined, or whether a largest value of the three-phase voltages is greater than a high voltage fault trigger threshold is determined. If yes, it is determined that a voltage asymmetry fault occurs.

Preferably, the controller is further configured to obtain a fifth current limit value $I_5$ based on $I_3$ and $I_4$, and limit a magnitude of a positive-sequence active current by using $I_5$.

Preferably, the controller is specifically configured to: when a sum $I_{12}$ of $I_1$ and $I_2$ is less than or equal to a preset current, make $I_3$ be equal to $I_1$, where the preset current is a rated current of the converter or a maximum current of the converter; or when the sum $I_{12}$ of $I_1$ and $I_2$ is greater than the preset current, obtain $I_3$ based on the preset current and a ratio of $I_1$ to $I_{12}$.

Preferably, the controller is specifically configured to: when a sum $I_{12}$ of $I_1$ and $I_2$ is less than or equal to a preset current, make $I_4$ be equal to $I_2$, where the preset current is a rated current of the converter or a maximum current of the converter; or when the sum $I_{12}$ of $I_1$ and $I_2$ is greater than the preset current, obtain $I_4$ based on the preset current and a ratio of $I_2$ to $I_{12}$.

Preferably, the controller is specifically configured to obtain $I_5$ based on $I_3$, $I_4$, and a preset current, where the preset current is a rated current of the converter or a maximum current of the converter.

Preferably, the controller is specifically configured to obtain $I_3$ by using the following formula:

$$I_3 = \frac{I_1 \times I_{LMT}}{I_1 + I_2},$$

where

$I_{LMT}$ is the preset current.

Preferably, the controller is specifically configured to obtain $I_4$ by using the following formula:

$$I_4 = \frac{I_2 \times I_{LMT}}{I_1 + I_2},$$

where

$I_{LMT}$ is the preset current.

Preferably, the controller is specifically configured to obtain $I_5$ by using the following formula:

$$I_5 = \max\left[\sqrt{(I_{LMT} - |I_4|)^2 - |I_3|^2}, K_3 \times I_{LMT}\right],$$

where

$I_{LMT}$ is the preset current, $K_3$ is a preset adjustment coefficient for the positive-sequence active current, and $0 < K_3 \leq 1$.

Preferably, the controller is specifically configured to limit the magnitude of the positive-sequence reactive current and limit the magnitude of the negative-sequence reactive current in the following manner:

$$|I_{Q1}^*| \leq I_3, |I_{Q2}^*| \leq I_4,$$

where

$I_{Q1}^*$ is a commanded value of the positive-sequence reactive current, and $I_{Q2}^*$ is a commanded value of the negative-sequence reactive current.

Preferably, the controller is specifically configured to limit the magnitude of the positive-sequence active current in the following manner:

$$|I_{P1}^*| \leq I_5,$$

where

$I_{P1}^*$ is a commanded value of the positive-sequence active current.

According to the foregoing technical solutions, it can be learned that the embodiments of this application have the following advantages:

When a voltage asymmetry fault occurs, a first current limit value is obtained based on a post-fault positive-sequence voltage and a pre-fault positive-sequence reactive current, and a second current limit value is obtained based on a post-fault negative-sequence voltage and a pre-fault negative-sequence voltage. A third current limit value and a fourth current limit value are obtained based on the first current limit value and the second current limit value. A magnitude limit value for a positive-sequence reactive current, namely, the third current limit value, and a magnitude limit value for a negative-sequence reactive current, namely, the fourth current limit value, are directly obtained based on a parameter obtained at a converter port. After the third current limit value and the fourth current limit value are obtained, a magnitude of a positive-sequence reactive current is limited by using the third current limit value, and a magnitude of the negative-sequence reactive current is limited by using the fourth current limit value, so that the positive-sequence reactive current does not exceed the third current limit value, and the negative-sequence reactive current does not exceed the fourth current limit value, thereby preventing the negative-sequence reactive current injected when the voltage asymmetry fault occurs from causing an overcurrent.

In the current control method, a magnitude limit value for the positive-sequence reactive current and a magnitude limit value for the negative-sequence reactive current may be directly obtained at a time, without repeated iterative calculation. A positive-sequence reactive current and a negative-sequence reactive current that meet a requirement are obtained within a relatively short time, so that a reactive current adjustment time can be shortened. In the technical solutions provided in this application, when a voltage asymmetry fault occurs, a positive-sequence reactive current and a negative-sequence reactive current that meet a requirement may be injected into a power grid while a time requirement is met, to resolve a problem that a negative-sequence reactive current causes an overcurrent for a converter.

**BRIEF DESCRIPTION OF DRAWINGS**

FIG. 1 is a schematic diagram of power transmission and transformation according to an embodiment of this application;

FIG. 2 is a schematic diagram of unbalanced currents according to an embodiment of this application;

FIG. 3 is a flowchart of a current control method according to an embodiment of this application;

FIG. 4 is a flowchart of determining a voltage asymmetry fault according to an embodiment of this application;

FIG. 5 is a flowchart of a method for obtaining $I_3$ according to an embodiment of this application;

FIG. 6 is a flowchart of a method for obtaining $I_4$ according to an embodiment of this application;

FIG. 7A is an effect diagram of reactive current adjustment in a conventional technology;

FIG. 7B is an effect diagram of reactive current adjustment according to an embodiment of this application;

FIG. 8 is a flowchart of another current control method according to an embodiment of this application; and

FIG. 9 is a schematic diagram of a converter system according to an embodiment of this application.

**DESCRIPTION OF EMBODIMENTS**

To enable persons skilled in the art to better understand and implement the technical solutions provided in the embodiments of this application, the following describes in detail application scenarios of the technical solutions with reference to the accompanying drawings.

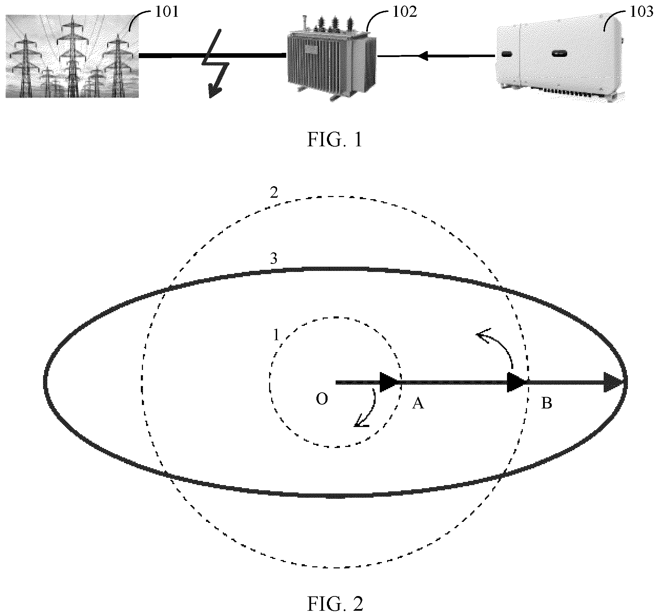

FIG. 1 is a schematic diagram of power transmission and transformation according to an embodiment of this application.

A converter 103 may convert a direct current into an alternating current and transmit the alternating current to a transformer 102. The converter 103 may be an inverter. A source of a direct current at an input end of the converter may be a direct current power source, for example, a direct current provided by a photovoltaic power generating system.

The transformer 102 is configured to perform voltage transformation on the alternating current transmitted by the converter 103, and then transmit the alternating current to a power grid 101 through a transmission line. The power grid 101 herein is an alternating current power grid.

Alternatively, the converter 103 may be a rectifier. To be specific, an alternating current transmitted by the transformer 102 from the power grid 101 is rectified into a direct current. This is not limited in the embodiments of this application. The converter 103 may be a bidirectional converter, and may serve as a rectifier or an inverter in different scenarios.

In an actual operating process, an operating environment is relatively harsh, and an actual scenario is relatively complex. Therefore, a voltage asymmetry fault, such as a single-phase fault or a two-phase fault, is likely to occur on the transmission line. In this case, a positive-sequence reactive current and a negative-sequence reactive current may be injected into the power grid 101 while ensuring that the converter 103 is on the grid. However, the negative-sequence reactive current is likely to cause three-phase current imbalance for the converter 103.

To resolve an overcurrent problem of a current and meet a requirement of a power grid for a reactive current adjustment time, the following describes specific methods provided in the embodiments of this application.

Method embodiment 1

When a voltage asymmetry fault occurs on a power grid, to help the power grid with asymmetry recovery, a converter injects a positive-sequence reactive current and a negative-sequence reactive current into the power grid. However, the negative-sequence reactive current causes three-phase current imbalance for the converter. The following describes a cause of current imbalance with reference to the accompanying drawings.

FIG. 2 is a schematic diagram of unbalanced currents according to an embodiment of this application.

Both a positive-sequence current and a negative-sequence current have circular tracks.

A dashed-line circle 1 is a track of a negative-sequence reactive current. A dashed-line circle 2 is a track of a positive-sequence reactive current. A solid-line ellipse 3 is a track of an actual current.

The dashed-line circle 1 is a track formed through clockwise rotation by using a circle center O as a circle center and a negative-sequence reactive current OA as a radius.

The dashed-line circle 2 is a track formed through counterclockwise rotation by using the circle center O as a circle center and a positive-sequence reactive current OB as a radius.

A preset current is a rated current of a converter or a maximum current of a converter. When a sum of the positive-sequence reactive current OA and the negative-sequence reactive current OB exceeds the preset current, it indicates that an overcurrent may have occurred.

As shown in the figure, when the negative-sequence reactive current OA and the positive-sequence reactive current OB are in a same direction, the sum of the negative-sequence reactive current OA and the positive-sequence reactive current OB exceeds the preset current. This may cause an overcurrent problem for the converter.

To meet a requirement for a reactive current adjustment time and resolve an overcurrent problem for a converter, the embodiments of this application provide a current control method for a voltage asymmetry fault. In the method, when a voltage asymmetry fault occurs, a magnitude limit value for a negative-sequence reactive current and a magnitude limit value for a positive-sequence reactive current are directly obtained by using a parameter obtained at a converter port. Then a magnitude of the negative-sequence reactive current is limited by using the magnitude limit value for the negative-sequence reactive current, and a magnitude of a positive-sequence reactive current is limited by using the magnitude limit value for the positive-sequence reactive current. In the method, the magnitude limit value for the positive-sequence reactive current and the magnitude limit value for the negative-sequence reactive current may be directly obtained at a time, without repeated iterative calculation, so that a reactive current adjustment time can be shortened. When a voltage asymmetry fault occurs on a power grid, a requirement for a reactive current adjustment time in an on-grid standard can be met, and an overcurrent problem can also be resolved for a converter.

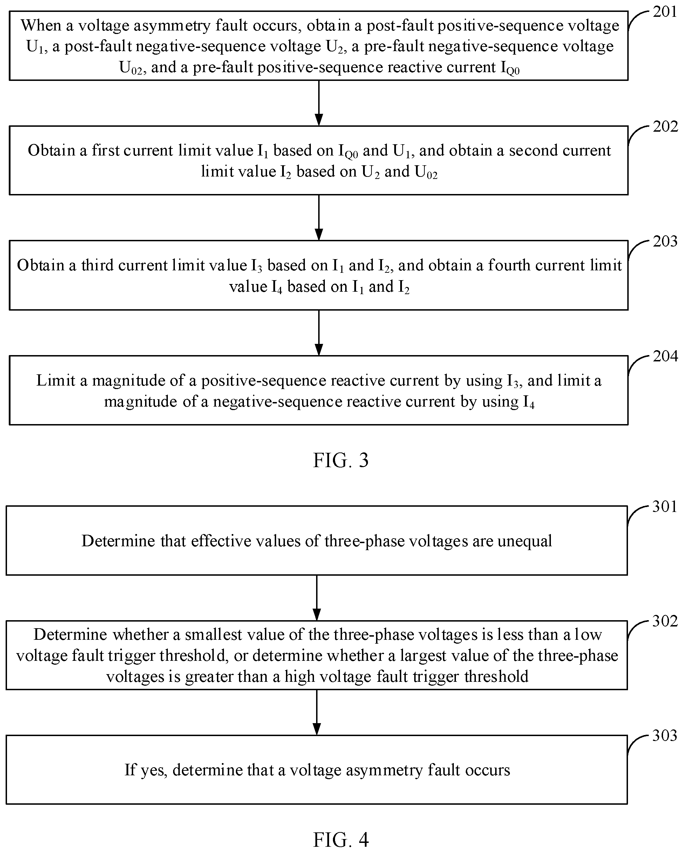

FIG. 3 is a flowchart of a current control method according to an embodiment of this application.

The current control method provided in this embodiment of this application includes the following steps.

Step 201: When a voltage asymmetry fault occurs, obtain a post-fault positive-sequence voltage $U_1$, a post-fault negative-sequence voltage $U_2$, a pre-fault negative-sequence voltage $U_{02}$, and a pre-fault positive-sequence reactive current $I_{Q0}$.

A specific manner of determining a voltage asymmetry fault is not limited in this application. For example, whether a voltage asymmetry fault occurs may be determined by using three-phase voltages at a converter port. The three-phase voltages may be three-phase line voltages or three-phase phase voltages.

FIG. 4 is a flowchart of determining a voltage asymmetry fault according to an embodiment of this application.

The procedure includes the following steps.

Step 301: Determine that the three-phase voltages are unequal.

For example, whether the three-phase voltages are equal may be determined by using effective values of the three-phase voltages.

Specifically, whether effective values of the three-phase phase voltages are equal may be determined, or whether effective values of the three-phase line voltages are equal may be determined.

Step 302: Determine whether a smallest value of the three-phase voltages is less than a low voltage fault trigger threshold, or determine whether a largest value of the three-phase voltages is greater than a high voltage fault trigger threshold.

If it is determined, by using the three-phase phase voltages, that the effective values of the three-phase voltages are unequal, the three-phase phase voltages are used in all subsequent processes of determining a voltage asymmetry fault. If it is determined, by using the three-phase line voltages, that the effective values of the three-phase voltages are unequal, the three-phase line voltages are used in all subsequent processes of determining a voltage asymmetry fault.

The three-phase phase voltages are used as an example for detailed description below.

If it is determined, by using the three-phase phase voltages, that the effective values of the three-phase voltages are unequal, when whether the smallest value of the three-phase voltages is less than the low voltage fault trigger threshold is determined, a smallest value of the three-phase phase voltages is compared with the low voltage fault trigger threshold; or when whether the largest value of the three-phase voltages is greater than the high voltage fault trigger threshold is determined, a largest value of the three-phase phase voltages is compared with the high voltage fault trigger threshold. Similarly, a principle of determining, by using the three-phase line voltages, whether an asymmetry fault occurs is the same as that of determining, by using the three-phase phase voltages, whether an asymmetry fault occurs, except that fault trigger thresholds corresponding to the two cases are different. Details are not described herein again.

Step 303: If yes, determine that a voltage asymmetry fault occurs.

When the smallest value of the three-phase voltages is less than the low voltage fault trigger threshold, or the largest value of the three-phase voltages is greater than the high voltage fault trigger threshold, it is determined that the voltage asymmetry fault occurs.

After it is determined that the voltage asymmetry fault occurs, to obtain a negative-sequence reactive current and a positive-sequence reactive current that meet a requirement, a magnitude limit value for a negative-sequence reactive current and a magnitude limit value for a positive-sequence reactive current need to be obtained by using the post-fault positive-sequence voltage $U_1$, the post-fault negative-sequence voltage $U_2$, the pre-fault negative-sequence voltage $U_{02}$, and the pre-fault positive-sequence reactive current $I_{Q0}$. Then a magnitude of the negative-sequence reactive current is limited by using the magnitude limit value for the negative-sequence reactive current, and a magnitude of a positive-sequence reactive current is limited by using the magnitude limit value for the positive-sequence reactive current, so that no overcurrent problem occurs when a converter operates by using a negative-sequence reactive current obtained through magnitude limiting and a positive-sequence reactive current obtained through magnitude limiting.

In this embodiment of this application, a process of obtaining the post-fault positive-sequence voltage $U_1$, the post-fault negative-sequence voltage $U_2$, the pre-fault negative-sequence voltage $U_{02}$, and the pre-fault positive-sequence reactive current $I_{Q0}$ is not limited. For example, the post-fault positive-sequence voltage $U_1$, the post-fault negative-sequence voltage $U_2$, the pre-fault negative-sequence voltage $U_{02}$, and the pre-fault positive-sequence reactive current $I_{Q0}$ may be obtained in real time; or the three-phase voltages and three-phase currents at the converter port may be detected in real time, and when it is determined that the voltage asymmetry fault occurs, the post-fault positive-sequence voltage $U_1$, the post-fault negative-sequence voltage $U_2$, the pre-fault negative-sequence voltage $U_{02}$, and the pre-fault positive-sequence reactive current $I_{Q0}$ are obtained.

Step 202: Obtain a first current limit value $I_1$ based on $I_{Q0}$ and $U_1$, and obtain a second current limit value $I_2$ based on $U_2$ and $U_{02}$.

To meet requirements for a positive-sequence reactive current during a fault period in different standards, this embodiment of this application provides two implementations of obtaining the first current limit value $I_1$.

A specific implementation of obtaining the first current limit value $I_1$ is not limited in this embodiment of this application. Persons skilled in the art may select, according to an actual requirement, a method for obtaining the first current limit value $I_1$.

Implementation 1:

The first current limit value $I_1$ is obtained based on $I_{Q0}$, $U_1$, a preset current $I_{LMT}$, the pre-fault positive-sequence voltage $U_{01}$, and a rated voltage $U_N$ of the converter. Specifically, $I_1$ is obtained by using the following formula:

$$I_1 = |I_{Q0} + K_1 \times I_{LMT} \times (U_{01} - U_1)/U_N|,$$

where
$I_{LMT}$ and $U_N$ are parameters of the converter, both $I_{LMT}$ and $U_N$ are known values after the converter is determined, $K_1$ is a preset adjustment coefficient for the positive-sequence reactive current, $0 < K_1 \leq 10$, and $I_{LMT}$ is a rated current of the converter or a maximum current of the converter.

Implementation 2:

The first current limit value $I_1$ is obtained based on $I_{Q0}$, $U_1$, a preset current $I_{LMT}$, a preset trigger threshold $U_{TR}$ for a voltage asymmetry fault, and a rated voltage $U_N$ of the converter. Specifically, $I_1$ is obtained by using the following formula:

$$I_1 = |I_{Q0} + K_1 \times I_{LMT} \times (U_{TR} - U_1)/U_N|,$$

where
$K_1$ is a preset adjustment coefficient for the positive-sequence reactive current, $0 < K_1 \leq 10$, $U_{TR}$ may be a low voltage fault trigger threshold or a high voltage fault trigger threshold, and $I_{LMT}$ is a rated current of the converter or a maximum current of the converter.

A specific value of $U_{TR}$ is not limited in this embodiment of this application. For a low voltage fault and a high voltage fault, values of $U_{TR}$ are different. $U_{TR}$ corresponding to the high voltage fault is greater than $U_{TR}$ corresponding to the low voltage fault. For example, the low voltage fault trigger threshold is 0.9, and the high voltage fault trigger threshold is 1.1.

The following describes a manner of obtaining the second current limit value $I_2$.

The second current limit value $I_2$ is obtained based on $U_2$, a preset current $I_{LMT}$, a rated voltage $U_N$ of the converter, and $U_{02}$. Specifically, $I_2$ is obtained by using the following formula:

$$I_2 = |K_2 \times I_{LMT} \times (U_{02} - U_2)/U_N|,$$

where
$K_2$ is a preset adjustment coefficient for the negative-sequence reactive current, and $0 < K_2 \leq 10$.

Step 203: Obtain a third current limit value $I_3$ based on $I_1$ and $I_2$, and obtain a fourth current limit value $I_4$ based on $I_1$ and $I_2$.

$I_3$ is directly proportional to $I_1$, and $I_4$ is directly proportional to $I_2$. Therefore, after $I_1$ and $I_2$ are obtained, $I_3$ and $I_4$ may be obtained based on $I_1$ and $I_2$. In the technical solution provided in this embodiment of this application, in a process of obtaining $I_3$ and $I_4$, the magnitude limit value for the positive-sequence reactive current, namely, $I_3$, and the magnitude limit value for the negative-sequence reactive current, namely, $I_4$, are directly obtained without complex iterative operations.

A sequence for obtaining $I_3$ and $I_4$ is not limited in this embodiment of this application. $I_3$ and $I_4$ may be obtained simultaneously or separately.

For ease of understanding by persons skilled in the art, a specific process of obtaining $I_3$ is described in detail below, and a process of obtaining $I_4$ is described in detail subsequently.

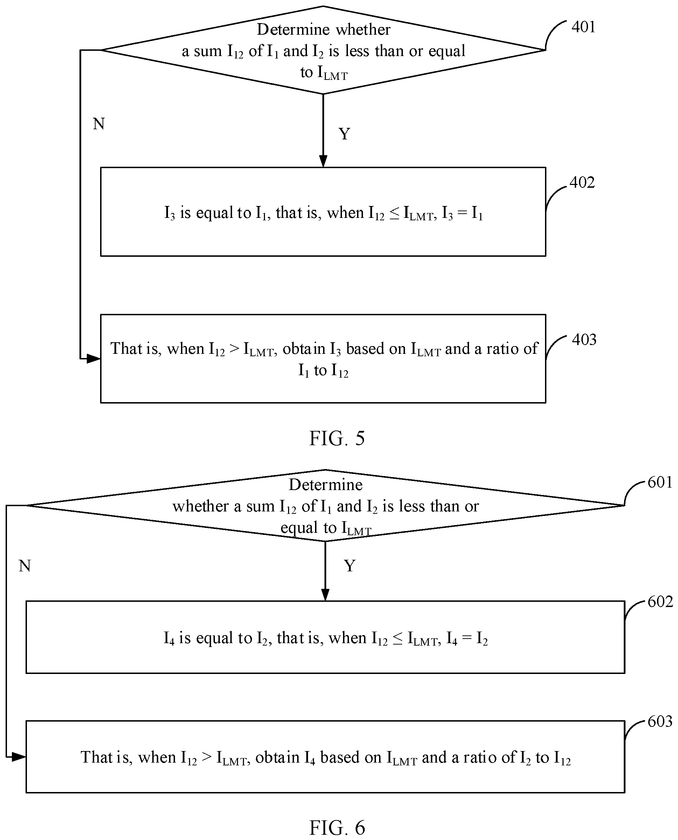

FIG. 5 is a flowchart of a method for obtaining $I_3$ according to an embodiment of this application.

The method for obtaining the third current limit value in this embodiment of this application includes the following steps.

Step 401: Determine whether a sum $I_{12}$ of $I_1$ and $I_2$ is less than or equal to $I_{LMT}$. If yes (that is, Y in the figure), perform step 402. If no (that is, N in the figure), perform step 403.

$$I_{12} = I_1 + I_2.$$

Step 402: $I_3$ is equal to $I_1$. To be specific, when $I_{12} \leq I_{LMT}$, $I_3 = I_1$.

When the sum $I_{12}$ of $I_1$ and $I_2$ is less than or equal to $I_{LMT}$, it indicates that the sum $I_{12}$ of $I_1$ and $I_2$ that are obtained by using $U_1$, $U_2$, $U_{02}$, and $I_{Q0}$ does not exceed the preset current $I_{LMT}$. Therefore, $I_1$ may be directly used as $I_3$, and the magnitude of the positive-sequence reactive current is limited by using $I_3$, so that a sum of the positive-sequence reactive current and the negative-sequence reactive current does not exceed the preset current.

Step 403: When $I_{12} > I_{LMT}$, obtain $I_3$ based on $I_{LMT}$ and a ratio of $I_1$ to $I_{12}$.

When the sum $I_{12}$ of $I_1$ and $I_2$ is greater than $I_{LMT}$, it indicates that the sum $I_{12}$ of $I_1$ and $I_2$ exceeds the preset current $I_{LMT}$ after $I_1$ and $I_2$ are obtained by using $U_1$, $U_2$, $U_{02}$, and $I_{QO}$. Therefore, $I_1$ needs to be adjusted in an equiproportional manner. Then the magnitude of the positive-sequence reactive current is limited by using $I_3$ obtained through the adjustment, so that a sum of the positive-sequence reactive current and the negative-sequence reactive current does not exceed the preset current $I_{LMT}$.

A specific process of obtaining $I_3$ after $I_1$ is adjusted is as follows:

$$I_3 = \frac{I_1 \times I_{LMT}}{I_1 + I_2}, (I_1 + I_2 > I_{LMT}),$$

where
$I_{LMT}$ is the preset current, that is, $I_3$ is obtained based on an equiproportional relationship of $I_1$.

With reference to FIG. 2, the solid-line ellipse 3 is the track of the actual current, that is, the sum $I_{12}$ of $I_1$ and $I_2$.

When the sum $I_{12}$ of $I_1$ and $I_2$ is greater than $I_{LMT}$, after the magnitude of the positive-sequence reactive current is limited by using $I_1$, the sum of the positive-sequence reactive current and the negative-sequence reactive current still exceeds the preset current $I_{LMT}$. Therefore, $I_1$ needs to be decreased in an equiproportional manner based on $I_{LMT}$ and the ratio of $I_1$ to $I_{12}$, to obtain $I_3$.

Therefore, when the magnitude of the positive-sequence reactive current is limited by using $I_3$, the sum of the positive-sequence reactive current and the negative-sequence reactive current can be prevented from exceeding the preset current $I_{LMT}$.

The following describes a process of obtaining $I_4$.

FIG. 6 is a flowchart of a method for obtaining $I_4$ according to an embodiment of this application.

The method includes the following steps.

Step 601: Determine whether a sum $I_{12}$ of $I_1$ and $I_2$ is less than or equal to $I_{LMT}$. If yes (that is, Y in the figure), perform step 602. If no (that is, N in the figure), perform step 603.

$$I_{12} = I_1 + I_2.$$

Step 602: $I_4$ is equal to $I_2$. To be specific, when $I_{12} \leq I_{LMT}$, $I_4 = I_2$.

When the sum $I_{12}$ of $I_1$ and $I_2$ is less than or equal to $I_{LMT}$, it indicates that neither $I_1$ nor $I_2$ obtained by using $U_1$, $U_2$, $U_{02}$, and $I_{Q0}$ exceeds the preset current $I_{LMT}$. Therefore, $I_2$ may be directly used as $I_4$, and the magnitude of the negative-sequence reactive current is limited by using $I_4$, so that a sum of the negative-sequence reactive current and the positive-sequence reactive current does not exceed the preset current.

Step 603: When $I_{12} > I_{LMT}$, obtain $I_4$ based on $I_{LMT}$ and a ratio of $I_2$ to $I_{12}$.

When the sum $I_{12}$ of $I_1$ and $I_2$ is greater than $I_{LMT}$, it indicates that the sum $I_{12}$ of $I_1$ and $I_2$ exceeds the preset current $I_{LMT}$ after $I_1$ and $I_2$ are obtained by using $U_1$, $U_2$, $U_{02}$, and $I_{Q0}$. Therefore, $I_1$ and $I_2$ need to be decreased in an equiproportional manner based on $I_{LMT}$ and the ratio of $I_2$ to $I_{12}$, to obtain $I_4$. Then the magnitude of the negative-sequence reactive current is limited by using $I_4$ obtained through the adjustment, so that a sum of the negative-sequence reactive current and the positive-sequence reactive current does not exceed the preset current $I_{LMT}$.

A formula for obtaining $I_4$ after $I_2$ is adjusted is as follows:

$$I_4 = \frac{I_2 \times I_{LMT}}{I_1 + I_2}, \ (I_1 + I_2 > I_{LMT}),$$

where

$I_{LMT}$ is the preset current, that is, $I_4$ is obtained based on an equiproportional relationship of $I_2$.

A principle of obtaining $I_4$ is similar to that of obtaining $I_3$. For a specific principle, refer to step 403 and FIG. 2. Details are not described herein again.

In the foregoing processes of obtaining $I_3$ and $I_4$, $I_3$ and $I_4$ are directly obtained by using $U_1$, $U_2$, $U_{02}$, and $I_{Q0}$, without repeated iterative calculation. Then the magnitude of the positive-sequence reactive current is limited by using $I_3$ so that the positive-sequence reactive current does not exceed $I_3$, and the magnitude of the negative-sequence reactive current is limited by using $I_4$ so that the negative-sequence reactive current does not exceed $I_4$. Therefore, in the current control method provided in this embodiment of this application, a time required for obtaining a positive-sequence reactive current and a negative-sequence reactive current that meet a requirement can be reduced.

Step 204: Limit the magnitude of the positive-sequence reactive current by using $I_3$, and limit the magnitude of the negative-sequence reactive current by using $I_4$.

The magnitude of the positive-sequence reactive current is limited by using $I_3$, and the magnitude of the negative-sequence reactive current is limited by using $I_4$, so that the sum of the positive-sequence reactive current and the negative-sequence reactive current does not exceed the preset current $I_{LMT}$.

Limiting the magnitude of the positive-sequence reactive current by using $I_3$ may be limiting a magnitude of a commanded value of the positive-sequence reactive current. Specifically, $|I_{Q1}^*| \leq I_3$. Limiting the magnitude of the negative-sequence reactive current by using $I_4$ may be limiting a magnitude of a commanded value of the negative-sequence reactive current. Specifically, $|I_{Q2}^*| \leq I_4$.

$I_{Q1}^*$ is a commanded value of the positive-sequence reactive current, and $I_{Q2}^*$ is a commanded value of the negative-sequence reactive current.

After the magnitude of the commanded value of the positive-sequence reactive current is limited by using $I_3$, the converter may be controlled based on a magnitude-limited commanded value of the positive-sequence reactive current and a magnitude-limited commanded value of the negative-sequence reactive current. Specifically, a driving pulse signal for a switch in the converter may be generated based on the magnitude-limited commanded value of the positive-sequence reactive current and the magnitude-limited commanded value of the negative-sequence reactive current, so that a current in the converter is not subject to an overcurrent phenomenon.

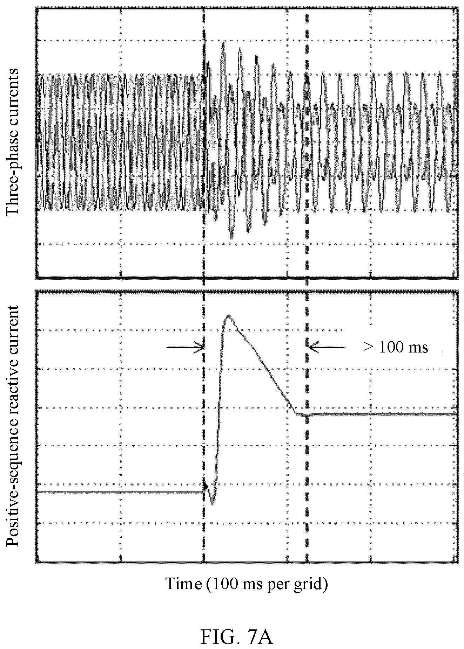

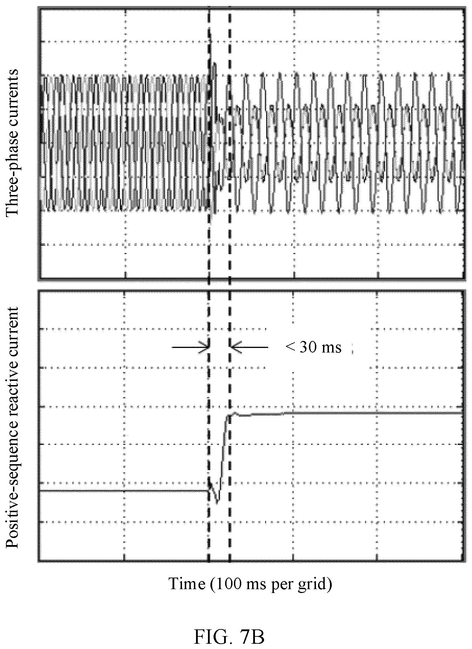

To enable persons skilled in the art to better understand a technical effect of the technical solution provided in this embodiment of this application, the following provides comparative description with reference to a solution in a conventional technology. Refer to FIG. 7A and FIG. 7B. FIG. 7A is an effect diagram of reactive current adjustment in the conventional technology, and FIG. 7B is an effect diagram of reactive current adjustment according to an embodiment of this application.

It can be seen from FIG. 7A that a reactive current adjustment time exceeds 100 ms in the technical solution provided in the conventional technology. However, in FIG. 7B, a reactive current adjustment time is less than 30 ms in the solution provided in this embodiment of this application. Clearly, compared with 100 ms, 30 ms shortens a reactive current adjustment time, thereby meeting a requirement of a power grid for a reactive current adjustment time.

Therefore, in the current control method provided in this embodiment of this application, when the commanded value of the positive-sequence reactive current and the commanded value of the negative-sequence reactive current are generated, the magnitude of the commanded value of the positive-sequence reactive current is limited by using the third current limit value, and the magnitude of the commanded value of the negative-sequence reactive current is limited by using the fourth current limit value, so that the positive-sequence reactive current does not exceed the third current limit value, and the negative-sequence reactive current does not exceed the fourth current limit value, thereby preventing the negative-sequence reactive current injected when the voltage asymmetry fault occurs from causing an overcurrent.

In the current control method, a magnitude limit value for the positive-sequence reactive current and a magnitude limit value for the negative-sequence reactive current may be directly obtained at a time, without repeated iterative calculation. A positive-sequence reactive current and a negative-sequence reactive current that meet a requirement are obtained within a relatively short time, so that a reactive current adjustment time can be shortened. In the technical solution provided in this application, when a voltage asymmetry fault occurs, a positive-sequence reactive current and a negative-sequence reactive current that meet a requirement may be injected into a power grid while a time requirement is met, to resolve a problem that a negative-sequence reactive current causes an overcurrent for a converter.

Method embodiment 2

In a current control method provided in the embodiment 2 of this application, on a basis of limiting a magnitude of a positive-sequence reactive current and limiting a magnitude of a negative-sequence reactive current, a magnitude of a positive-sequence active current is further limited.

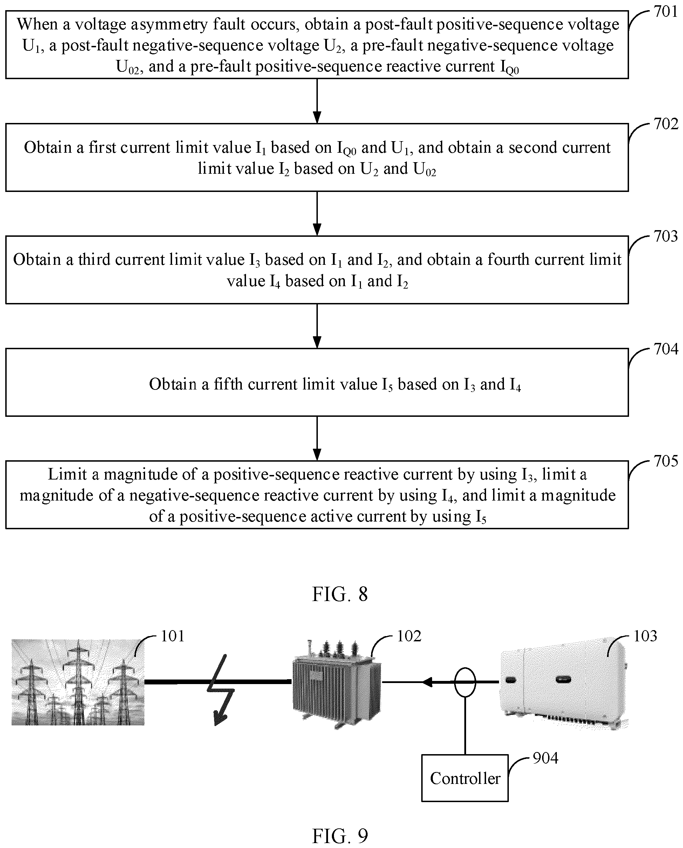

FIG. 8 is a flowchart of a current control method according to an embodiment of this application.

Step 701 to step 703 are similar to step 201 to step 203 in the method embodiment 1, and details are not described herein again.

On a basis of step 701 to step 703, the method further includes the following steps.

Step 704: Obtain a fifth current limit value $I_5$ based on $I_3$ and $I_4$.

When a voltage asymmetry fault occurs on a power grid, a magnitude of a positive-sequence active current further needs to be limited to ensure safety.

Therefore, the magnitude of the positive-sequence active current further needs to be limited while a magnitude of a reactive current is limited.

A formula for obtaining the fifth current limit value $I_5$ based on $I_3$ and $I_4$ is as follows:

$$I_5 = \max\left[\sqrt{(I_{LMT} - |I_4|)^2 - |I_3|^2}, K_3 \times I_{LMT}\right],$$

where
$I_{LMT}$ is the preset current, $K_3$ is a preset adjustment coefficient for the positive-sequence active current, and $0 < K_3 \leq 1$.

It can be learned from the foregoing formula that a value of $I_5$ is a larger value of $\sqrt{(I_{LMT} - |I_4|)^2 - |I_3|^2}$ and $K_3 \times I_{LMT}$.

When $\sqrt{(I_{LMT} - |I_4|)^2 - |I_3|^2} > K_3 \times I_{LMT}$, $I_5 = \sqrt{(I_{LMT} - |I_4|)^2 - |I_3|^2}$.

When $\sqrt{(I_{LMT} - |I_4|)^2 - |I_3|^2} < K_3 \times I_{LMT}$, $I_5 = K_3 \times I_{LMT}$.

When $\sqrt{(I_{LMT} - |I_4|)^2 - |I_3|^2} = K_3 \times I_{LMT}$, a value of $I_5$ may be $\sqrt{(I_{LMT} - |I_4|)^2 - |I_3|^2}$ or $K_3 \times I_{LMT}$.

In the current control method provided in this embodiment of this application, in a process of obtaining $I_5$, after $I_3$ and $I_4$ are obtained, $I_5$ may be directly obtained based on $I_3$ and $I_4$, without repeated iterative calculation, thereby reducing a time for obtaining a positive-sequence active current that meets a requirement. Therefore, with the technical solution provided in this application, a converter can limit a magnitude of a positive-sequence active current, limit a magnitude of a positive-sequence reactive current, and limit a magnitude of a negative-sequence reactive current within a relatively short time.

Step 705: Limit a magnitude of a positive-sequence reactive current by using $I_3$, limit a magnitude of a negative-sequence reactive current by using $I_4$, and limit a magnitude of a positive-sequence active current by using $I_5$.

For specific processes of limiting the magnitude of the positive-sequence reactive current by using $I_3$ and limiting the magnitude of the negative-sequence reactive current by using $I_4$, refer to step 204 in the method embodiment 1. Details are not described herein again. The limiting a magnitude of a positive-sequence active current by using $I_5$ is described in detail below.

The limiting a magnitude of a positive-sequence active current by using $I_5$ may be limiting a magnitude of a commanded value of the positive-sequence active current. Specifically, $|I_{P1}{}^*| \leq I_5$.

$I_{P1}{}^*$ is a commanded value of the positive-sequence active current.

After the magnitude of the commanded value of the positive-sequence active current, the magnitude of the commanded value of the positive-sequence reactive current, and the magnitude of the commanded value of the negative-sequence reactive current are limited, the converter may be controlled based on a magnitude-limited commanded value of the positive-sequence active current, a magnitude-limited commanded value of the positive-sequence reactive current,

and a magnitude-limited commanded value of the negative-sequence reactive current. Specifically, a driving pulse signal for a switch in the converter may be generated based on the magnitude-limited commanded value of the positive-sequence active current, the magnitude-limited commanded value of the positive-sequence reactive current, and the magnitude-limited commanded value of the negative-sequence reactive current, so that a current in the converter is not subject to an overcurrent phenomenon.

In the current control method provided in this embodiment of this application, a magnitude limit value for the positive-sequence active current, a magnitude limit value for the positive-sequence reactive current, and a magnitude limit value for the negative-sequence reactive current may be directly obtained at a time. A positive-sequence active current, a negative-sequence reactive current, and a positive-sequence reactive current that meet a requirement can be obtained without repeated iterative calculation, thereby reducing a time required for obtaining the positive-sequence active current, the negative-sequence reactive current, and the positive-sequence reactive current that meet the requirement. Therefore, the converter can inject the positive-sequence reactive current and the negative-sequence reactive current that meet the requirement into the power grid while meeting a time requirement, thereby resolving a problem that a negative-sequence reactive current causes an overcurrent for a converter.

System embodiment 1

FIG. 9 is a schematic diagram of a converter system according to an embodiment of this application.

The converter system includes at least a converter 103 and a controller 904.

In some implementations, the converter system further includes a transformer 102. An example in which the converter system includes the transformer 102 is used for description below.

A first side of the converter 103 is used to connect to a direct current, and a second side of the converter 103 is used to connect to a first side of the transformer 102.

The converter 103 may be a bidirectional converter. To be specific, the converter 103 may convert a direct current into an alternating current and transmit the alternating current to a power grid 101, or may rectify an alternating current transmitted by the power grid 101 into a direct current.

A second side of the transformer 102 is used to connect to the power grid 101.

The transformer 102 may perform voltage transformation on the alternating current transmitted by the converter 103, and then transmit the alternating current to the power grid 101 through a transmission line.

A scenario in an actual operating process is relatively complex. Therefore, a voltage asymmetry fault, such as a single-phase fault or a two-phase fault, is likely to occur on the transmission line. In this case, a positive-sequence reactive current and a negative-sequence reactive current may be injected into the power grid 101 while ensuring that the converter 103 is on the grid. However, the negative-sequence reactive current is likely to cause three-phase current imbalance for the converter 103.

To resolve an overcurrent problem of a current and meet a requirement of the power grid for a reactive current adjustment time, in this system embodiment of this application, the controller 904 obtains a magnitude limit value for the positive-sequence reactive current and a magnitude limit value for the negative-sequence reactive current at a time, without repeated iterative calculation, so that the reactive current adjustment time can be shortened. Then the controller 904 limits a magnitude of a positive-sequence reactive current by using the magnitude limit value for the positive-sequence reactive current, and limits a magnitude of the negative-sequence reactive current by using the magnitude limit value for the negative-sequence reactive current. Therefore, when a voltage asymmetry fault occurs on the power grid, a requirement for a reactive current adjustment time in an on-grid standard can be met, and an overcurrent problem can also be resolved for the converter.

Specifically, the controller 904 is configured to: when a voltage asymmetry fault occurs, obtain a post-fault positive-sequence voltage $U_1$, a post-fault negative-sequence voltage $U_2$, a pre-fault negative-sequence voltage $U_{02}$, and a pre-fault positive-sequence reactive current $I_{Q0}$; obtain a first current limit value $I_1$ based on $I_{Q0}$ and $U_1$, and obtain a second current limit value $I_2$ based on $U_2$ and $U_{02}$; obtain a third current limit value $I_3$ based on $I_1$ and $I_2$, and obtain a fourth current limit value $I_4$ based on $I_1$ and $I_2$; and limit a magnitude of a positive-sequence reactive current by using $I_3$, and limit a magnitude of a negative-sequence reactive current by using $I_4$.

The controller 904 may determine, by obtaining three-phase voltages at a port of the converter 103, whether a voltage asymmetry fault occurs. For a specific determining process, refer to the method embodiment 1 and FIG. 4. Details are not described herein again.

After determining that a voltage asymmetry fault occurs, the controller 904 obtains the first current limit value $I_1$ based on $I_{Q0}$ and $U_1$, and obtains the second current limit value $I_2$ based on $U_2$ and $U_{02}$.

That the controller 904 obtains $I_1$ based on $I_{Q0}$ and $U_1$ is first described below, and the obtaining $I_2$ based on $U_2$ and $U_{02}$ is described subsequently.

To meet two different current limiting standards, the controller 904 may obtain $I_1$ in two different manners.

Manner 1:

The controller 904 obtains the first current limit value $I_1$ based on $I_{Q0}$, $U_1$, a preset current $I_{LMT}$, the pre-fault positive-sequence voltage $U_{01}$, and a rated voltage $U_N$ of the converter. Specifically, $I_1$ is obtained by using the following formula:

$$I_1 = |I_{Q0} + K_1 \times I_{LMT} \times (U_{01} - U_1)/U_N|,$$

where

$I_{LMT}$ and $U_N$ are parameters of the converter, both $I_{LMT}$ and $U_N$ are known values after the converter is determined, $K_1$ is a preset adjustment coefficient for the positive-sequence reactive current, $0 < K_1 \leq 10$, and $I_{LMT}$ is a rated current of the converter or a maximum current of the converter.

Manner 2:

The controller 904 obtains the first current limit value $I_1$ based on $I_{Q0}$, $U_1$, a preset current $I_{LMT}$, a preset trigger threshold $U_{TR}$ for a voltage asymmetry fault, and a rated voltage $U_N$ of the converter. Specifically, $I_1$ is obtained by using the following formula:

$$I_1 = |I_{Q0} + K_1 \times I_{LMT} \times (U_{TR} - U_1)/U_N|,$$

where

$K_1$ is a preset adjustment coefficient for the positive-sequence reactive current, $0 < K_1 \leq 10$, $U_{TR}$ may be a low voltage fault trigger threshold or a high voltage fault trigger threshold, and $I_{LMT}$ is a rated current of the converter or a maximum current of the converter.

The following describes a manner of obtaining $I_2$.

The controller 904 obtains the second current limit value $I_2$ based on $U_2$, a preset current $I_{LMT}$, a rated voltage $U_N$ of the converter, and $U_{02}$. Specifically, $I_2$ is obtained by using the following formula:

$$I_2 = |K_2 \times I_{LMT} \times (U_{02} - U_2)/U_N|,$$

where

$K_2$ is a preset adjustment coefficient for the negative-sequence reactive current, and $0 < K_2 \leq 10$.

$I_3$ is directly proportional to $I_1$, and $I_4$ is directly proportional to $I_2$. Therefore, after obtaining $I_1$ and $I_2$, the controller 904 may obtain $I_3$ and $I_4$ based on $I_1$ and $I_2$. In processes of obtaining $I_3$ and $I_4$, the controller 904 directly obtains a magnitude limit value for the positive-sequence reactive current, namely, $I_3$, and directly obtains a magnitude limit value for the negative-sequence reactive current, namely, $I_4$, without complex iterative operations.

A specific process of obtaining $I_3$ by the controller 904 based on $I_1$ and $I_2$ is as follows:

The controller 904 determines whether a sum $I_{12}$ of $I_1$ and $I_2$ is less than or equal to $I_{LMT}$, that is, $I_{12} = I_1 + I_2$. If yes, it indicates that the sum $I_{12}$ of $I_1$ and $I_2$ that are obtained by using $U_1$, $U_2$, $U_{02}$, and $I_{Q0}$ does not exceed the preset current $I_{LMT}$. Therefore, the controller 904 may directly use $I_1$ as $I_3$, that is, when $I_{12} \leq I_{LMT}$, $I_3 = I_1$, and limit the magnitude of the positive-sequence reactive current by using $I_3$, so that a sum of the positive-sequence reactive current and the negative-sequence reactive current does not exceed the preset current. If no, it indicates that the sum $I_{12}$ of $I_1$ and $I_2$ exceeds the preset current $I_{LMT}$, that is, $I_{12} > I_{LMT}$, after $I_1$ and $I_2$ are obtained by using $U_1$, $U_2$, $U_{02}$, and $I_{Q0}$. Therefore, the controller 904 needs to adjust $I_1$ in an equiproportional manner, and then limit the magnitude of the positive-sequence reactive current by using $I_3$ obtained through the adjustment, so that a sum of the positive-sequence reactive current and the negative-sequence reactive current does not exceed the preset current $I_{LMT}$.

Specifically, the controller may adjust $I_1$ in an equiproportional manner by using the following formula:

$$I_3 = \frac{I_1 \times I_{LMT}}{I_1 + I_2}, (I_1 + I_2 > I_{LMT}),$$

where

$I_{LMT}$ is the preset current, that is, $I_3$ is obtained based on an equiproportional relationship of $I_1$.

When the sum $I_{12}$ of $I_1$ and $I_2$ is greater than $I_{LMT}$, after the magnitude of the positive-sequence reactive current is limited by using $I_1$, the sum of the positive-sequence reactive current and the negative-sequence reactive current still exceeds the preset current $I_{LMT}$. Therefore, $I_1$ and $I_2$ need to be decreased in an equiproportional manner based on $I_{LMT}$ and a ratio of $I_1$ to $I_{12}$, to obtain $I_3$, so that a sum $I_{12}$ of $I_3$ obtained through the decrease and decreased $I_2$ does not exceed the preset current $I_{LMT}$.

Therefore, when the controller 904 limits the magnitude of the positive-sequence reactive current by using $I_3$, the sum of the positive-sequence reactive current and the negative-sequence reactive current can be prevented from exceeding the preset current $I_{LMT}$.

A specific process of obtaining $I_4$ by the controller 904 based on $I_1$ and $I_2$ is as follows:
The controller 904 determines whether a sum $I_{12}$ of $I_1$ and $I_2$ is less than or equal to $I_{LMT}$, that is, $I_{12} = I_1 + I_2$. If yes, it indicates that neither $I_1$ nor $I_2$ obtained by using $U_1$, $U_2$, $U_{02}$, and $I_{Q0}$ exceeds the preset current $I_{LMT}$. Therefore, $I_2$ may be directly used as $I_4$, that is, when $I_{12} \leq I_{LMT}$, $I_4 = I_2$, and the magnitude of the negative-sequence reactive current is limited by using $I_4$, so that a sum of the negative-sequence reactive current and the positive-sequence reactive current does not exceed the preset current. If no, it indicates that the sum $I_{12}$ of $I_1$ and $I_2$ exceeds the preset current $I_{LMT}$, that is, $I_{12} > I_{LMT}$, after $I_1$ and $I_2$ are obtained by using $U_1$, $U_2$, $U_{02}$, and $I_{Q0}$. Therefore, $I_2$ needs to be decreased in an equiproportional manner based on $I_{LMT}$ and a ratio of $I_2$ to $I_{12}$, to obtain $I_4$. Then the magnitude of the negative-sequence reactive current is limited by using $I_4$ obtained through the adjustment, so that a sum of the negative-sequence reactive current and the positive-sequence reactive current does not exceed the preset current $I_{LMT}$.

Specifically, the controller may adjust $I_2$ in an equiproportional manner by using the following formula:

$$I_4 = \frac{I_2 \times I_{LMT}}{I_1 + I_2}, (I_1 + I_2 > I_{LMT}),$$

where
$I_{LMT}$ is the preset current, that is, $I_4$ is obtained based on an equiproportional relationship of $I_2$.

In the processes of obtaining $I_3$ and $I_4$ by the controller 904, $I_3$ and $I_4$ are directly obtained by using $U_1$, $U_2$, $U_{02}$, and $I_{Q0}$, without repeated iterative calculation. Then the magnitude of the positive-sequence reactive current is limited by using $I_3$ so that the positive-sequence reactive current does not exceed $I_3$, and the magnitude of the negative-sequence reactive current is limited by using $I_4$ so that the negative-sequence reactive current does not exceed $I_4$. Therefore, in the current control method provided in this embodiment of this application, a time required for obtaining a positive-sequence reactive current and a negative-sequence reactive current that meet a requirement can be reduced.

After obtaining $I_3$ and $I_4$, the controller 904 limits the magnitude of the positive-sequence reactive current by using $I_3$, and limits the magnitude of the negative-sequence reactive current by using $I_4$, so that the sum of the positive-sequence reactive current and the negative-sequence reactive current does not exceed the preset current $I_{LMT}$.

Specifically, the controller 904 may limit a magnitude of a commanded value of the positive-sequence reactive current by using $I_3$, to achieve an objective of limiting the magnitude of the positive-sequence reactive current. Similarly, the controller 904 may also limit a magnitude of a commanded value of the negative-sequence reactive current by using $I_4$.

That the controller 904 limits the magnitude of the commanded value of the positive-sequence reactive current by using $I_3$ is described below.

The controller 904 specifies that $|I_{Q1}^*| \leq I_3$, where $I_{Q1}^*$ is the commanded value of the positive-sequence reactive current.

That the controller 904 limits the magnitude of the commanded value of the negative-sequence reactive current by using $I_4$ is described below.

The controller 904 specifies that $|I_{Q2}^*| \leq I_4$, where $I_{Q2}^*$ is the commanded value of the negative-sequence reactive current.

After limiting the magnitude of the commanded value of the positive-sequence reactive current by using $I_3$, the controller 904 may control the converter based on a magnitude-limited commanded value of the positive-sequence reactive current and a magnitude-limited commanded value of the negative-sequence reactive current. Specifically, a driving pulse signal for a switch in the converter may be generated based on the magnitude-limited commanded value of the positive-sequence reactive current and the magnitude-limited commanded value of the negative-sequence reactive current, so that a current in the converter is not subject to an overcurrent phenomenon.

Therefore, in the converter system provided in this embodiment of this application, when generating the commanded value of the positive-sequence reactive current and the commanded value of the negative-sequence reactive current, the controller may limit the magnitude of the commanded value of the positive-sequence reactive current by using the third current limit value, and limit the magnitude of the commanded value of the negative-sequence reactive current by using the fourth current limit value, so that the positive-sequence reactive current does not exceed the third current limit value, and the negative-sequence reactive current does not exceed the fourth current limit value, thereby preventing the negative-sequence reactive current injected when the voltage asymmetry fault occurs from causing an overcurrent. The controller in the converter system may directly obtain the magnitude limit value for the positive-sequence reactive current and the magnitude limit value for the negative-sequence reactive current at a time, without repeated iterative calculation. A positive-sequence reactive current and a negative-sequence reactive current that meet a requirement are obtained within a relatively short time, so that a reactive current adjustment time can be shortened. In the technical solution provided in this embodiment of this application, when a voltage asymmetry fault occurs, a positive-sequence reactive current and a negative-sequence reactive current that meet a requirement may be injected into a power grid while a time requirement is met, to resolve a problem that a negative-sequence reactive current causes an overcurrent for a converter.

System embodiment 2

With reference to FIG. 9, on a basis of limiting a magnitude of a positive-sequence reactive current and limiting a magnitude of a negative-sequence reactive current, the controller 904 further limits a magnitude of a positive-sequence active current.

The controller 904 may obtain a fifth current limit value $I_5$ based on $I_3$ and $I_4$.

When a voltage asymmetry fault occurs on a power grid, a magnitude of a positive-sequence active current further needs to be limited to ensure safety.

Therefore, the controller 904 further needs to limit the magnitude of the positive-sequence active current while limiting a magnitude of a reactive current. Therefore, a sum of the positive-sequence active current, the positive-sequence reactive current, and the negative-sequence reactive current meets a requirement of a preset current.

A formula for obtaining the fifth current limit value $I_5$ by the controller 904 based on $I_3$ and $I_4$ is as follows:

$$I_5 = \max\left[\sqrt{(I_{LMT} - |I_4|)^2 - |I_3|^2}, K_3 \times I_{LMT}\right],$$

where

$I_{LMT}$ is the preset current, $K_3$ is a preset adjustment coefficient for the positive-sequence active current, and $0 < K_3 \leq 1$.

It can be learned from the foregoing formula that a value of $I_5$ is a larger value of $\sqrt{(I_{LMT} - |I_4|)^2 - |I_3|^2}$ and $K_3 \times I_{LMT}$.

When $\sqrt{(I_{LMT} - |I_4|)^2 - |I_3|^2} > K_3 \times I_{LMT}$, $I_5 = \sqrt{(I_{LMT} - |I_4|)^2 - |I_3|^2}$ .

When $\sqrt{(I_{LMT} - |I_4|)^2 - |I_3|^2} < K_3 \times I_{LMT}$, $I_5 = K_3 \times I_{LMT}$ .

When $\sqrt{(I_{LMT} - |I_4|)^2 - |I_3|^2} = K_3 \times I_{LMT}$ , a value of $I_5$ may be $\sqrt{(I_{LMT} - |I_4|)^2 - |I_3|^2}$ or $K_3 \times I_{LMT}$.

In a process of obtaining $I_5$, after obtaining $I_3$ and $I_4$, the controller 904 may directly obtain $I_5$ based on $I_3$ and $I_4$, without repeated iterative calculation, thereby reducing a time for obtaining a positive-sequence active current that meets a requirement. Therefore, the converter 103 can limit the magnitude of the positive-sequence active current, limit the magnitude of the positive-sequence reactive current, and limit the magnitude of the negative-sequence reactive current within a relatively short time.

That the controller 904 limits the magnitude of the positive-sequence active current by using $I_5$ may be limiting a magnitude of a commanded value of the positive-sequence active current. Specifically, $|I_{P1}{}^*| \leq I_5$.

$I_{P1}{}^*$ is a commanded value of the positive-sequence active current.

After limiting the magnitude of the commanded value of the positive-sequence active current, the magnitude of the commanded value of the positive-sequence reactive current, and the magnitude of the commanded value of the negative-sequence reactive current, the controller may control the converter based on a magnitude-limited commanded value of the positive-sequence active current, a magnitude-limited commanded value of the positive-sequence reactive current, and a magnitude-limited commanded value of the negative-sequence reactive current. Specifically, a driving pulse signal for a switch in the converter may be generated based on the magnitude-limited commanded value of the positive-sequence active current, the magnitude-limited commanded value of the positive-sequence reactive current, and the magnitude-limited commanded value of the negative-sequence reactive current, so that a current in the converter is not subject to an overcurrent phenomenon.

In the converter system provided in this embodiment of this application, the controller may directly obtain a magnitude limit value for the positive-sequence active current, a magnitude limit value for the positive-sequence reactive current, and a magnitude limit value for the negative-sequence reactive current at a time. A positive-sequence active current, a negative-sequence reactive current, and a positive-sequence reactive current that meet a requirement can be obtained without repeated iterative calculation, thereby reducing a time required for obtaining the positive-sequence active current, the negative-sequence reactive current, and the positive-sequence reactive current that meet the requirement. Therefore, the converter can inject the positive-sequence reactive current and the negative-sequence reactive current that meet the requirement into the power grid while meeting a time requirement, thereby resolving a problem that a negative-sequence reactive current causes an overcurrent for a converter.

It should be understood that, in this application, "at least one" means one or more, and "a plurality of" means two or more. The term "and/or" is used to describe an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may represent: a, b, c, "a and b", "a and c", "b and c", or "a, b, and c", where a, b, and c may be singular or plural.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

**Claims**

1. A current control method for a voltage asymmetry fault, comprising:

   when a voltage asymmetry fault occurs, obtaining a post-fault positive-sequence voltage $U_1$, a post-fault negative-sequence voltage $U_2$, a pre-fault negative-sequence voltage $U_{02}$, and a pre-fault positive-sequence reactive current $I_{Q0}$;
   obtaining a first current limit value $I_1$ based on $I_{Q0}$ and $U_1$, and obtaining a second current limit value $I_2$ based on $U_2$ and $U_{02}$;
   obtaining a third current limit value $I_3$ based on $I_1$ and $I_2$, and obtaining a fourth current limit value $I_4$ based on $I_1$ and $I_2$, wherein $I_3$ is directly proportional to $I_1$, and $I_4$ is directly proportional to $I_2$; and
   limiting a magnitude of a positive-sequence reactive current by using $I_3$, and limiting a magnitude of a negative-sequence reactive current by using $I_4$.

2. The method according to claim 1, wherein a fifth current limit value $I_5$ is obtained based on $I_3$ and $I_4$, and a magnitude of a positive-sequence active current is limited by using $I_5$.

3. The method according to claim 1, wherein the obtaining $I_3$ based on $I_1$ and $I_2$ specifically comprises:

   when a sum $I_{12}$ of $I_1$ and $I_2$ is less than or equal to a preset current, $I_3$ is equal to $I_1$, wherein the preset current is a rated current of a converter or a maximum current of the converter; or
   when the sum $I_{12}$ of $I_1$ and $I_2$ is greater than the preset current, obtaining $I_3$ based on the preset current and a ratio of $I_1$ to $I_{12}$.

4. The method according to claim 1, wherein the obtaining $I_4$ based on $I_1$ and $I_2$ specifically comprises:

   when a sum $I_{12}$ of $I_1$ and $I_2$ is less than or equal to a preset current, $I_4$ is equal to $I_2$, wherein the preset current is a rated current of a converter or a maximum current of the converter; or
   when the sum $I_{12}$ of $I_1$ and $I_2$ is greater than the preset current, obtaining $I_4$ based on the preset current and a ratio of $I_2$ to $I_{12}$.

5. The method according to claim 2, wherein the obtaining a fifth current limit value $I_5$ based on $I_3$ and $I_4$ specifically comprises:
   obtaining $I_5$ based on $I_3$, $I_4$, and a preset current, wherein the preset current is a rated current of a converter or a maximum current of the converter.

6. The method according to claim 3, wherein the obtaining $I_3$ based on the preset current and a ratio of $I_1$ to $I_{12}$ is specifically obtaining $I_3$ by using the following formula:

$$I_3 = \frac{I_1 \times I_{LMT}}{I_1 + I_2},$$

wherein
$I_{LMT}$ is the preset current.

7. The method according to claim 4, wherein the obtaining $I_4$ based on the preset current and a ratio of $I_2$ to $I_{12}$ is specifically obtaining $I_4$ by using the following formula:

$$I_4 = \frac{I_2 \times I_{LMT}}{I_1 + I_2},$$

wherein
$I_{LMT}$ is the preset current.

8. The method according to claim 5, wherein the obtaining $I_5$ based on $I_3$, $I_4$, and a preset current is specifically obtaining $I_5$ by using the following formula:

$$I_5 = \max\left[\sqrt{(I_{LMT} - |I_4|)^2 - |I_3|^2}, K_3 \times I_{LMT}\right],$$

wherein
$I_{LMT}$ is the preset current, $K_3$ is a preset adjustment coefficient for the positive-sequence active current, and $0 < K_3 \leq 1$.

9. The method according to any one of claims 1 to 8, wherein the obtaining a first current limit value $I_1$ based on $I_{Q0}$ and $U_1$ is specifically obtaining $I_3$ by using the following formula:

$$I_1 = |I_{Q0} + K_1 \times I_{LMT} \times (U_{01} - U_1)/U_N|,$$

wherein
$I_{LMT}$ is the preset current, $U_{01}$ is the pre-fault positive-sequence voltage, $U_N$ is a rated voltage of the converter, $K_1$ is a preset adjustment coefficient for the positive-sequence reactive current, $0 < K_1 \leq 10$, and the preset current is the rated current of the converter or the maximum current of the converter.

10. The method according to any one of claims 1 to 8, wherein the obtaining a first current limit value $I_1$ based on $I_{Q0}$ and $U_1$ is specifically obtaining $I_1$ by using the following formula:

$$I_1 = |I_{Q0} + K_1 \times I_{LMT} \times (U_{TR} - U_1)/U_N|,$$

wherein
$I_{LMT}$ is the preset current, $U_{TR}$ is a preset trigger threshold for a voltage asymmetry fault, $U_N$ is a rated voltage of the converter, $K_1$ is a preset adjustment coefficient for the positive-sequence reactive current, and the preset current is the rated current of the converter or the maximum current of the converter.

11. The method according to any one of claims 1 to 8, wherein the obtaining a second current limit value $I_2$ based on $U_2$ and $U_{02}$ is specifically obtaining $I_2$ by using the following formula:

$$I_2 = |K_2 \times I_{LMT} \times (U_{02} - U_2)/U_N|,$$

wherein
$I_{LMT}$ is the preset current, $U_N$ is a rated voltage of the converter, $K_2$ is a preset adjustment coefficient for the negative-sequence reactive current, $0 < K_2 \leq 10$, and the preset current is the rated current of the converter or the maximum current of the converter.

12. The method according to any one of claims 1 to 8, wherein the limiting a magnitude of a positive-sequence reactive

current by using $I_3$, and limiting a magnitude of a negative-sequence reactive current by using $I_4$ is specifically as follows:

$$|I_{Q1}^*| \leq I_3, \ |I_{Q2}^*| \leq I_4,$$

wherein

$I_{Q1}^*$ is a commanded value of the positive-sequence reactive current, and $I_{Q2}^*$ is a commanded value of the negative-sequence reactive current.

13. The method according to claim 2, 5, or 8, wherein the limiting a magnitude of a positive-sequence active current by using $I_5$ is specifically as follows:

$$|I_{P1}^*| \leq I_5,$$

wherein

$I_{P1}^*$ is a commanded value of the positive-sequence active current.

14. A converter system, comprising a converter and a controller, wherein

a first side of the converter is used to connect to a direct current, and a second side of the converter is used to connect to a power grid;
the converter is configured to convert a direct current into an alternating current and transmit the alternating current to the power grid, or is configured to rectify an alternating current transmitted by the power grid into a direct current; and
the controller is configured to: when a voltage asymmetry fault occurs, obtain a post-fault positive-sequence voltage $U_1$, a post-fault negative-sequence voltage $U_2$, a pre-fault negative-sequence voltage $U_{02}$, and a pre-fault positive-sequence reactive current $I_{Q0}$; obtain a first current limit value $I_1$ based on $I_{Q0}$ and $U_1$, and obtain a second current limit value $I_2$ based on $U_2$ and $U_{02}$; obtain a third current limit value $I_3$ based on $I_1$ and $I_2$, and obtain a fourth current limit value $I_4$ based on $I_{Q0}$ and $U_1$; and limit a magnitude of a positive-sequence reactive current by using $I_3$, and limit a magnitude of a negative-sequence reactive current by using $I_4$, wherein $I_3$ is directly proportional to $I_1$, and $I_4$ is directly proportional to $I_2$.

15. The system according to claim 14, wherein the controller is further configured to obtain a fifth current limit value $I_5$ based on $I_3$ and $I_4$, and limit a magnitude of a positive-sequence active current by using $I_5$.

16. The system according to claim 14, wherein the controller is specifically configured to: when a sum $I_{12}$ of $I_1$ and $I_2$ is less than or equal to a preset current, make $I_3$ be equal to $I_1$, wherein the preset current is a rated current of the converter or a maximum current of the converter; or
when the sum $I_{12}$ of $I_1$ and $I_2$ is greater than the preset current, obtain $I_3$ based on the preset current and a ratio of $I_1$ to $I_{12}$.

17. The system according to claim 14, wherein the controller is specifically configured to: when a sum $I_{12}$ of $I_1$ and $I_2$ is less than or equal to a preset current, make $I_4$ be equal to $I_2$, wherein the preset current is a rated current of the converter or a maximum current of the converter; or
when the sum $I_{12}$ of $I_1$ and $I_2$ is greater than the preset current, obtain $I_4$ based on the preset current and a ratio of $I_2$ to $I_{12}$.

18. The system according to claim 15, wherein the controller is specifically configured to obtain $I_5$ based on $I_3$, $I_4$, and a preset current, wherein the preset current is a rated current of the converter or a maximum current of the converter.

19. The system according to claim 16, wherein the controller is specifically configured to obtain $I_3$ by using the following formula:

$$I_3 = \frac{I_1 \times I_{LMT}}{I_1 + I_2},$$

wherein
$I_{LMT}$ is the preset current.

20. The system according to claim 17, wherein the controller is specifically configured to obtain $I_4$ by using the following formula:

$$I_4 = \frac{I_2 \times I_{LMT}}{I_1 + I_2},$$

wherein
$I_{LMT}$ is the preset current.

21. The system according to claim 18, wherein the controller is specifically configured to obtain $I_5$ by using the following formula:

$$I_5 = \max\left[\sqrt{(I_{LMT} - |I_4|)^2 - |I_3|^2},\ K_3 \times I_{LMT}\right],$$

wherein
$I_{LMT}$ is the preset current, $K_3$ is a preset adjustment coefficient for the positive-sequence active current, and $0 < K_3 \leq 1$.

22. The system according to any one of claims 14 to 21, wherein the controller is specifically configured to limit the magnitude of the positive-sequence reactive current and limit the magnitude of the negative-sequence reactive current in the following manner:

$$|I_{Q1}{}^*| \leq I_3,\ |I_{Q2}{}^*| \leq I_4,$$

wherein
$I_{Q1}{}^*$ is a commanded value of the positive-sequence reactive current, and $I_{Q2}{}^*$ is a commanded value of the negative-sequence reactive current.

23. The system according to claim 15, 19, or 21, wherein the controller is specifically configured to limit the magnitude of the positive-sequence active current in the following manner:

$$|I_{P1}{}^*| \leq I_5,$$

wherein
$I_{P1}{}^*$ is a commanded value of the positive-sequence active current.

FIG. 1

FIG. 2

When a voltage asymmetry fault occurs, obtain a post-fault positive-sequence voltage $U_1$, a post-fault negative-sequence voltage $U_2$, a pre-fault negative-sequence voltage $U_{02}$, and a pre-fault positive-sequence reactive current $I_{Q0}$ ⌐201

Obtain a first current limit value $I_1$ based on $I_{Q0}$ and $U_1$, and obtain a second current limit value $I_2$ based on $U_2$ and $U_{02}$ ⌐202

Obtain a third current limit value $I_3$ based on $I_1$ and $I_2$, and obtain a fourth current limit value $I_4$ based on $I_1$ and $I_2$ ⌐203

Limit a magnitude of a positive-sequence reactive current by using $I_3$, and limit a magnitude of a negative-sequence reactive current by using $I_4$ ⌐204

FIG. 3

Determine that effective values of three-phase voltages are unequal ⌐301

Determine whether a smallest value of the three-phase voltages is less than a low voltage fault trigger threshold, or determine whether a largest value of the three-phase voltages is greater than a high voltage fault trigger threshold ⌐302

If yes, determine that a voltage asymmetry fault occurs ⌐303

FIG. 4

Determine whether a sum $I_{12}$ of $I_1$ and $I_2$ is less than or equal to $I_{LMT}$ — 401

N

Y

$I_3$ is equal to $I_1$, that is, when $I_{12} \leq I_{LMT}$, $I_3 = I_1$ — 402

That is, when $I_{12} > I_{LMT}$, obtain $I_3$ based on $I_{LMT}$ and a ratio of $I_1$ to $I_{12}$ — 403

FIG. 5

Determine whether a sum $I_{12}$ of $I_1$ and $I_2$ is less than or equal to $I_{LMT}$ — 601

N

Y

$I_4$ is equal to $I_2$, that is, when $I_{12} \leq I_{LMT}$, $I_4 = I_2$ — 602

That is, when $I_{12} > I_{LMT}$, obtain $I_4$ based on $I_{LMT}$ and a ratio of $I_2$ to $I_{12}$ — 603

FIG. 6

Time (100 ms per grid)

FIG. 7A

FIG. 7B

When a voltage asymmetry fault occurs, obtain a post-fault positive-sequence voltage $U_1$, a post-fault negative-sequence voltage $U_2$, a pre-fault negative-sequence voltage $U_{02}$, and a pre-fault positive-sequence reactive current $I_{Q0}$ — 701

Obtain a first current limit value $I_1$ based on $I_{Q0}$ and $U_1$, and obtain a second current limit value $I_2$ based on $U_2$ and $U_{02}$ — 702

Obtain a third current limit value $I_3$ based on $I_1$ and $I_2$, and obtain a fourth current limit value $I_4$ based on $I_1$ and $I_2$ — 703

Obtain a fifth current limit value $I_5$ based on $I_3$ and $I_4$ — 704

Limit a magnitude of a positive-sequence reactive current by using $I_3$, limit a magnitude of a negative-sequence reactive current by using $I_4$, and limit a magnitude of a positive-sequence active current by using $I_5$ — 705

FIG. 8

FIG. 9

## INTERNATIONAL SEARCH REPORT

| International application No. |
| --- |
| **PCT/CN2020/104454** |

**A. CLASSIFICATION OF SUBJECT MATTER**

H02J 3/00(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNPAT, CNKI, WPI, EPODOC: 正序, 负序, 电流, 电压, 无功, 不对称, 不平衡, 电网, 逆变, 限幅, 限制, 限值, unbalance, sequence, negative, positive, current, voltage, grid, converter, limitation

**C. DOCUMENTS CONSIDERED TO BE RELEVANT**

| Category* | Citation of document, with indication, where appropriate, of the relevant passages | Relevant to claim No. |
| --- | --- | --- |
| A | CN 106533239 A (TIANJIN UNIVERSITY) 22 March 2017 (2017-03-22) description paragraphs 58-145 | 1-23 |
| A | CN 104505841 A (XUJI ELECTRIC CO., LTD. et al.) 08 April 2015 (2015-04-08) entire document | 1-23 |
| A | CN 104009486 A (ANHUI UNIVERSITY OF TECHNOLOGY) 27 August 2014 (2014-08-27) entire document | 1-23 |
| A | CN 109193753 A (BEIJING GOLDWIND SCIENCE & CREATION WINDPOWER EQUIPMENT CO., LTD.) 11 January 2019 (2019-01-11) entire document | 1-23 |
| A | CN 109217342 A (SHENZHEN HOPEWIND ELECTRIC CO., LTD.) 15 January 2019 (2019-01-15) entire document | 1-23 |
| A | US 2014320148 A1 (EATON CORPORATION) 30 October 2014 (2014-10-30) entire document | 1-23 |

☐ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 April 2021** | **27 April 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/104454**

| Patent document cited in search report | | | Publication date (day/month/year) | Patent family member(s) | | | Publication date (day/month/year) |
|---|---|---|---|---|---|---|---|
| CN | 106533239 | A | 22 March 2017 | CN | 106533239 | B | 22 March 2019 |
| CN | 104505841 | A | 08 April 2015 | CN | 104505841 | B | 06 July 2018 |
| CN | 104009486 | A | 27 August 2014 | CN | 104009486 | B | 27 January 2016 |
| CN | 109193753 | A | 11 January 2019 | CN | 109193753 | B | 30 October 2020 |
| CN | 109217342 | A | 15 January 2019 | None | | | |
| US | 2014320148 | A1 | 30 October 2014 | EP | 2992339 | A1 | 09 March 2016 |
| | | | | CN | 105143894 | B | 02 October 2018 |
| | | | | CN | 105143894 | A | 09 December 2015 |
| | | | | WO | 2014179102 | A1 | 06 November 2014 |
| | | | | EP | 2992339 | B1 | 17 May 2017 |
| | | | | US | 8963556 | B2 | 24 February 2015 |

Form PCT/ISA/210 (patent family annex) (January 2015)